(19) Europäisches Patentamt
European Patent Office
Office européen des brevets

(11) **EP 2 282 271 A1**

(12) **EUROPEAN PATENT APPLICATION**

(43) Date of publication:
**09.02.2011 Bulletin 2011/06**

(51) Int Cl.:
*G06F 17/27* (2006.01)   *G06F 17/30* (2006.01)

(21) Application number: **10008294.0**

(22) Date of filing: **09.08.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(30) Priority: **07.08.2009 US 232102 P**
**12.08.2009 US 540198**

(71) Applicant: **Buzzmetrics Ltd.**
**46733 Herzlia Pituach (IL)**

(72) Inventor: **Eden, Tal**
**66085 Tel Aviv (IL)**

(74) Representative: **Samson & Partner**
**Widenmayerstrasse 5**
**80538 München (DE)**

(54) **Systems, methods and apparatus for relative frequency based phrase mining**

(57)     Example systems, methods, processes, and apparatus identify phrases in electronic information. One or more phrase dictionaries (520) are created from content in one or more electronic documents (310, 505). A relative frequency value is generated for each phrase in each of the one or more phrase dictionaries (520). The relative frequency value for a phrase is based at least in part on a comparison between a frequency of the phrase in the electronic document (310, 505) and a frequency of each individual word in the phrase. One or more phrases are selected based at least in part on a threshold and the relative frequency value generated for each phrase. The selected one or more phrases and the relative frequency values associated with each of the selected one or more phrases are output for graphical display to a user.

FIG. 6

600

START

610 — RETREIVE A SAMPLE OF ELECTRONIC DOCUMENTS

620 — DIVIDE EACH MESSAGE INTO SPEECH PARTS

630 — CREATE PHRASE DICTIONARIES FROM SPEECH PARTS

640 — CALCULATE A RELATIVE FREQUENCY FOR EACH PHRASE IN EACH DICTIONARY

650 — RETAIN A NUMBER OF PHRASES AND RELATIVE FREQUENCY VALUES FOR EACH DICTIONARY

660 — REVIEW EACH PHRASE LIST TO REMOVE PHRASES SUBSUMED BY OTHERS IN ANOTHER LIST

670 — MERGE LISTS INTO A NEW PHRASE LIST

680 — SORT THE LIST ACCORDING TO RELATIVE FREQUENCY VALUE

690 — IDENTIFY A FIRST N PHRASES AS "MEANINGFUL" PHRASES

END

EP 2 282 271 A1

**Description**

CROSS-REFERENCE TO RELATED APPLICATIONS

The present application claims the benefit of priority to U.S. Provisional Application No. 61/232,102, filed on August 7, 2009, entitled "SYSTEMS, METHODS AND APPARATUS FOR RELATIVE FREQUENCY BASED PHRASE MINING", which is herein incorporated by reference in its entirety.

FIELD OF THE DISCLOSURE

The present disclosure relates generally to data mining in electronic documents and, more particularly, to methods and apparatus to determine relative frequencies of phrases in an electronic document.

BACKGROUND

A variety of public (e.g., the World Wide Web and the Internet) and private (e.g., corporate intranet) networks provide a variety of electronically accessible and searchable content to reviewers. Both consumer and business users can access this content to find information about products and services.

Retail establishments, service providers, and product manufacturers are often interested in the shopping activities, behaviors, opinions, and/or habits of buyers. Information available online including surveys, reviews, blogs, etc., can provide insight into such buyer characteristics.

SUMMARY

Computer-implemented methods and apparatuses for relative frequency based phrase mining are disclosed as defined in the appended claims.

An example computer-implemented method of identifying phrases in electronic information includes receiving an electronic document including a plurality of words and phrases regarding at least one topic. The method includes creating one or more phrase dictionaries from content of the electronic document. The method includes generating a relative frequency value for each phrase in each of the one or more phrase dictionaries. The relative frequency value for a phrase is based at least in part on a comparison between a frequency of the phrase in the electronic document and a frequency of each individual word in the phrase. The method includes selecting one or more phrases based at least in part on a threshold and the relative frequency value generated for each phrase. The method includes outputting the selected one or more phrases and the relative frequency values associated with each of the selected one or more phrases for graphical display to a user.

In an example, the method includes obtaining further comprises obtaining a plurality of electronic documents and sampling a subset of the plurality of electronic documents for phrase mining.

In an example, generating the relative frequency value includes generating the relative frequency value for each phrase based at least in part on:

$$\sqrt[n]{\frac{freq(phrase)}{\sqrt[n]{freq(word1) * freq(word2) * \cdots * freq(word\ n)}}},$$

wherein phrase= word1 word2 ... word n and wherein a frequency of the phrase is determined from an n-word dictionary and a frequency of each individual word 1 through n in the phrase is determined from a 1-word dictionary.

In an example, outputting the selected one or more phrases and the relative frequency values drives automated analysis of the electronic document.

In an example, the method includes dividing the content of the electronic document into speech parts and creating the one or more phrase dictionaries from the speech parts.

In an example, the method includes reviewing the one or more phrases and the corresponding relative frequency values to remove phrases subsumed in other larger phrases having relative frequency values.

In an example, the method includes merging remaining one or more phrases and relative frequency values into a single list and sorting the list based on relative frequency value.

Certain examples provide an electronic document phrase mining apparatus. The apparatus includes a parser to separate content of an electronic document into a plurality of speech parts. The speech parts include one or more phrases. The parser creates a phrase dictionary for organizing each length of phrase in the electronic document. The apparatus includes a phrase value calculator to generate a relative frequency value for each phrase in each phrase dictionary. The relative frequency value for a phrase is based at least in part on a comparison between a frequency of the phrase in the electronic document and a frequency of each individual word in the phrase. The apparatus includes a sorter to select one or more phrases based at least in part on a threshold and the relative frequency value generated for each phrase. The apparatus includes an output to output the selected one or more phrases and the relative frequency values associated with each of the selected one or more phrases for graphical display to a user. 9.An apparatus according to claim 8, wherein the parser creates a plurality of phrase dictionaries including a one word phrase dictionary and an n word phrase dictionary, wherein n corresponds to a number of words in a specific dictionary and wherein a maximum n corresponds to a number of words in the longest phrase identified by the parser in the electronic document.

In an example, the plurality of phrase dictionaries includes a one word phrase dictionary, a two word phrase dictionary, a three word phrase dictionary, a four word phrase dictionary, and a five word phrase dictionary.

In an example, the apparatus includes a document sampler to obtain a plurality of electronic documents and sampling a subset of the plurality of electronic documents for phrase mining.

In an example, the phrase value calculator is to generate the relative frequency value for each phrase based at least in part on:

$$\sqrt[n]{\frac{freq(phrase)}{\sqrt[n]{freq(word1)*freq(word2)*\cdots*freq(word\,n)}}},$$

wherein phrase= word1 word2 ... word n and wherein a frequency of the phrase is determined from an n-word dictionary and a frequency of each individual word 1 through n in the phrase is determined from a 1-word dictionary.

In an example, the output is to output the selected one or more phrases and the relative frequency values to drive automated analysis of the electronic document.

In an example, the apparatus includes a sorter to review the one or more phrases and the corresponding relative frequency values to remove phrases subsumed in other larger phrases having relative frequency values.

In an example, the apparatus includes a merger merging remaining one or more phrases and relative frequency values from the sorter into a single list and sorting the list based on relative frequency value.

Certain examples include a tangible computer-readable storage medium including instructions which, when executed by a processing machine, implement an electronic message phrase mining system. The system includes a parser to separate content of a collection of one or more electronic messages into a plurality of speech parts. The speech parts including one or more phrases. The parser is to create a phrase dictionary for organizing each length of phrase in the electronic document. The system includes a phrase value calculator to generate a relative frequency value for each phrase in each phrase dictionary. The relative frequency value for a phrase is based at least in part on a comparison between a frequency of the phrase in the collection of one or more electronic messages and a frequency of each individual word in the phrase. The system includes a sorter to select one or more phrases based at least in part on a threshold and the relative frequency value generated for each phrase. The system includes an output to output the selected one or more phrases and the relative frequency values associated with each of the selected one or more phrases for graphical display to a user.

In an example, the parser is to create a plurality of phrase dictionaries including a one word phrase dictionary and an n word phrase dictionary, wherein n corresponds to a number of words in a specific dictionary and wherein a maximum n corresponds to a number of words in the longest phrase identified by the parser in the electronic document.

In an example, the plurality of phrase dictionaries includes a one word phrase dictionary, a two word phrase dictionary, a three word phrase dictionary, a four word phrase dictionary, and a five word phrase dictionary.

In an example, the system includes a document sampler to obtain a plurality of electronic documents and sampling a subset of the plurality of electronic documents for phrase mining.

In an example, the phrase value calculator is to generate the relative frequency value for each phrase based at least in part on:

$$\sqrt[n]{\frac{freq(phrase)}{\sqrt[n]{freq(word1)*freq(word2)*\cdots*freq(word\,n)}}},$$

wherein phrase= word1 word2 ... word n and wherein a frequency of the phrase is determined from an n-word dictionary and a frequency of each individual word 1 through n in the phrase is determined from a 1-word dictionary.

In an example, the output is to output the selected one or more phrases and the relative frequency values to drive automated analysis of the electronic document.

In an example, the system includes a sorter to review the one or more phrases and the corresponding relative frequency values to remove phrases subsumed in other larger phrases having relative frequency values.

In an example, the system includes a merger merging remaining one or more phrases and relative frequency values from the sorter into a single list and sorting the list based on relative frequency value.

## BRIEF DESCRIPTION OF THE DRAWINGS

FIG. 1 is a block diagram of an example apparatus to gather electronic document data from one or more electronic data sources, such as web sites.

FIG. 2 depicts an example tag or topic cloud providing a visual representation of frequency and relationships between words in an electronic document.

FIG. 3 is an example system to download and process information in electronic documents.

FIG. 4 is a block diagram of an example electronic document processing system.

FIG. 5 is a block diagram of an example phrase mining system to identify phrases in an electronic message and/or other electronic document and determine a frequency associated with a phrase.

FIG. 6 is a flow diagram representative of example machine readable instructions which may be executed to perform relative frequency based phrase mining in one or more electronic messages and/or documents.

FIG. 7 is a block diagram of an example processor system that may execute the example instructions of FIG. 6 to implement some or all of the example apparatus and/or system of FIGs. 1, 3, 4, and/or 5 described herein.

## DETAILED DESCRIPTION

Although the following discloses example methods, systems, articles of manufacture, and apparatus including, among other components, software executed on hardware, it should be noted that such methods, systems, articles of manufacture, and apparatus are merely illustrative and should not be considered as limiting. For example, it is contemplated that any or all of these hardware and software components could be embodied exclusively in hardware, exclusively in software, exclusively in firmware, or in any combination of hardware, software, and/or firmware. Accordingly, while the following describes example methods, systems, articles of manufacture, and apparatus, the examples provided are not the only way to implement such methods, systems, articles of manufacture, and apparatus.

Example methods, processes, apparatus, systems, articles of manufacture, and machine-readable medium can be used to process a collection of electronic documents. For example, a collection of electronic documents (e.g., stored and/or available via the World Wide Web) can be searched for certain electronic messages. Documents, such as electronic message documents, can be collected from information found on the Web representing user opinions, attitudes, reviews, etc. Online news groups, discussion groups, forums, chat sites, Internet blogs, review or opinion pages, etc., can be mined for electronic messages to be processed and reviewed. People's opinions, attitudes, and/or other feedback regarding ideas, products, and/or messages can be collected and analyzed to provide information alone and/or in conjunction with key word or phrase search results.

Examples can be implemented in conjunction with the Buzz Insight Tools and/or My BuzzMetrics tools offered by Nielsen BuzzMetrics International. For example, relative frequency phrase mining can be provided as part of a customizable brand monitoring and analytics dashboard enabling users to monitor and analyze what is being said about a brand or organization from a wide range of consumer-generated media (CGM) sources including, for example, social media websites, social news websites, Internet forums, blogs, wikis, discussion lists, video, pictures, etc.

Briefly, in some examples, a computer-implemented method of identifying phrases in electronic information is provided. The computer-implemented method includes receiving an electronic document including a plurality of words and phrases regarding at least one topic. One or more phrase dictionaries are created from content of the electronic document. A relative frequency value is generated for each phrase in each of the one or more phrase dictionaries. The relative frequency value for a phrase is based at least in part on a comparison between a frequency of the phrase in the electronic document and a frequency of each individual word in the phrase. One or more phrases are selected based at least in part on a threshold and the relative frequency value generated for each phrase. The selected one or more phrases and the relative frequency values associated with each of the selected one or more phrases are output for graphical display to a user.

In some examples, an electronic document phrase mining apparatus is provided. The apparatus includes a parser separating content of an electronic document into a plurality of speech parts, the speech parts including one or more phrases. The parser creates a phrase dictionary for organizing each length of phrase in the electronic document.

A phrase value calculator generates a relative frequency value for each phrase in each phrase dictionary. The relative frequency value for a phrase is based at least in part on a comparison between a frequency of the phrase in the electronic document and a frequency of each individual word in the phrase. A sorter selects one or more phrases based at least in part on a threshold and the relative frequency value generated for each phrase. An output outputs the selected one or more phrases and the relative frequency values associated with each of the selected one or more phrases for graphical display to a user.

In some examples, a tangible computer-readable storage medium is provided including instructions which, when executed by a processing machine, implement an electronic message phrase mining system. The implemented system includes a parser separating content of a collection of one or more electronic messages into a plurality of speech parts, the speech parts including one or more phrases. The parser creates a phrase dictionary for organizing each length of phrase in the electronic document. A phrase value calculator generates a relative frequency value for each phrase in each phrase dictionary. The relative frequency value for a phrase is based at least in part on a comparison between a frequency of the phrase in the electronic document and a frequency of each individual word in the phrase. A sorter selects one or more phrases based at least in part on a threshold and the relative frequency value generated for each phrase. An output outputs the selected one or more phrases and the relative frequency values associated with each of the selected one or more phrases for graphical display to a user.

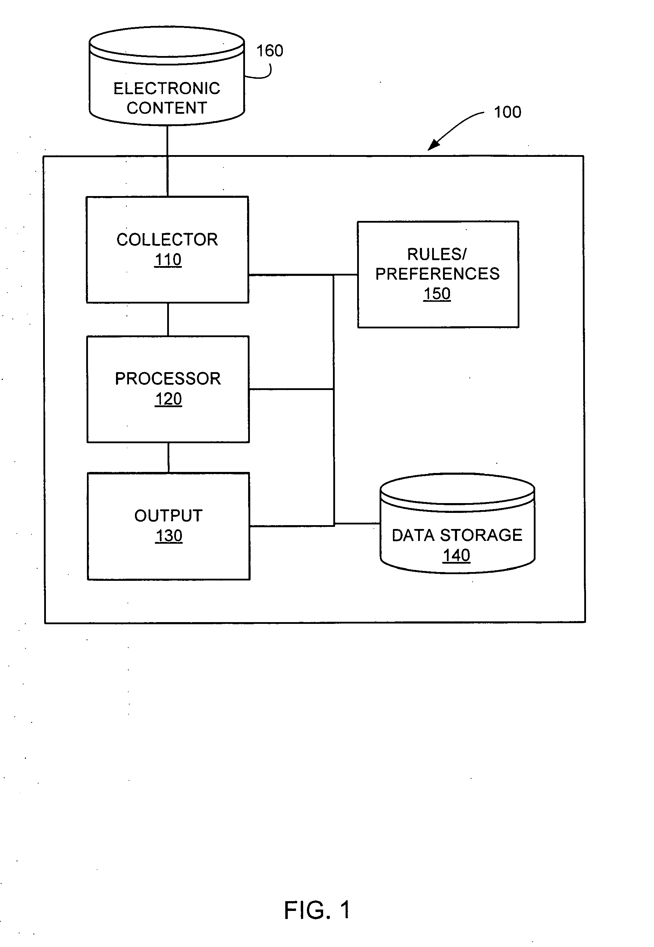

FIG. 1 is a block diagram of an example apparatus 100 to gather electronic document data from one or more electronic data sources, such as consumer-generated media (CGM) and/or consumer-fortified media (CFM) sources including, for example, social media websites, social news websites, Internet forums, blogs, wikis, discussion lists, video, pictures, etc. The apparatus 100 includes a collector 110, a processor 120, and an output 130. The collector 110 provides data to the processor 120 and/or a data storage 140. The data storage 140 provides data to the processor 120. In some examples, the data storage 140 can also receive data from the processor 120. The processor 120 provides processed data to the output 130 for output to a user and/or other system. The collector 110, processor 120, and output 130 operate in conjunction with one or more stored rules and/or preferences 150 (e.g., user-specified, user group-specified, subject matter-specified, and/or system-specified preferences, for example). The collector 110, processor 120, output 130, data storage 140, and rules/preferences 150 can be implemented as separate devices, software, and/or firmware, or can be combined.

The collector 110 is configured to collect data, including but not limited to data found in electronic documents available via one or more sources of electronic content 160. The data collected includes a plurality of words and phrases related to one or more topics. Electronic content can include, for example, CGM and/or CFM sources such as social media websites, social news websites, Internet forums, blogs, wikis, discussion lists, video, pictures, non-online electronic content, etc., such as web sites where people report news and/or express their views and feelings. For example: Internet users may express their views regarding a new product, service, program, etc. In an example, the collector 110 is programmed as a crawler in a spider network, arranged to detect new data in a certain group of CGM/CFM sources.

In an example, the collector 110 utilizes one or more programs (e.g., scripts) as well as rules and/or preferences from the rules/preferences 150 to identify and gather information from a CGM/CFM source, such as a web site. For example, a script and associated rules and/or preferences can define which parts of a specific page of a preselected web site bear a fixed content such as a logo of a firm operating the site, and which parts contain dynamic content, bearing topical or attitude data, such as a continuous flow of user's messages in a web site's chat room. In another example, the script may define a comparison to be made by the collector 110 between current content of a web page or a part of a page and data previously downloaded from the same page or part of the page.

The collector 110 can be configured to gather electronic content in any way, such as continuously, periodically, in response to an event, in response to manual initiation by a user, etc. In some examples, a schedule or frequency of collection can be configured for a particular web site, group or type of web sites, subject matter, etc.

The processor 120 processes the collected electronic data. The processor 120 can receive electronic data collected by the collector 110 directly from the collector 110 and/or from the data storage 140. The processor 120 parses the electronic data, performs content analysis of the parsed electronic data, mines the electronic data, and provides resulting data analysis and/or other output, for example. These techniques may implement one or more algorithms, which include but is not limited to: neural networks, rule reduction, decision trees, pattern analysis, text and linguistic analysis techniques, or any other relevant algorithm.

The output 130 receives information from the processor 120 and outputs the information based on the processed electronic data. The output information can be presented graphically to a user via a web browser-based application, spreadsheet, text document, slide presentation, multimedia file, etc.

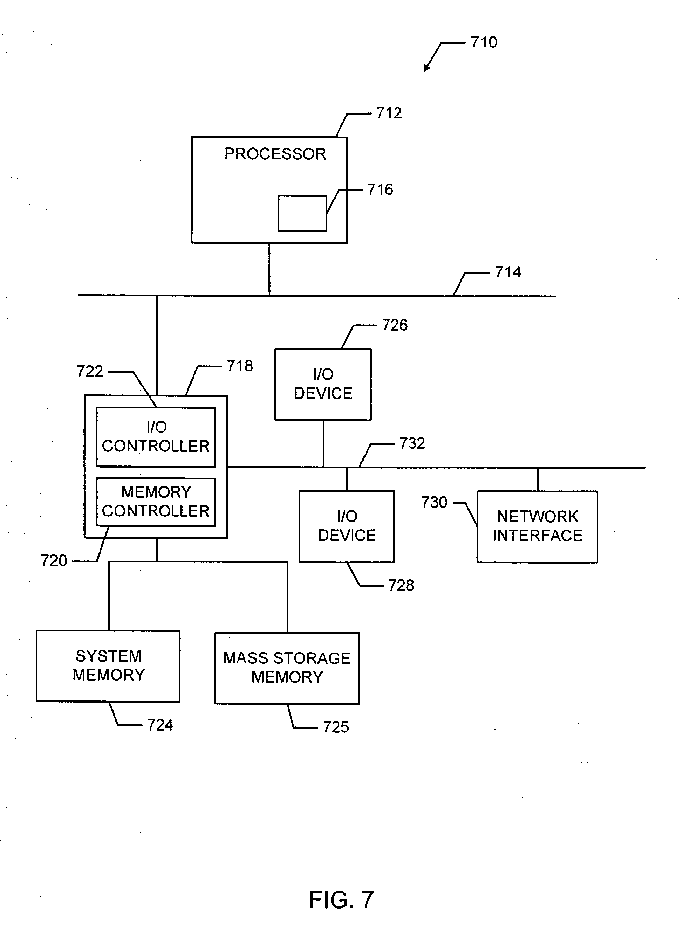

Any or all of the components of the apparatus 100 can be implemented in software, hardware, and/or firmware separately and/or in any number of combinations. For example, one or more integrated circuits, discrete semiconductor components, and/or passive electronic components can be used. Thus, for example, any of the components of apparatus 100, including the collector 110, the processor 120, the output 130, the data storage 140, and the rules/preferences 150, or parts thereof, can be implemented using one or more circuit(s), programmable processor(s), application specific integrated circuit(s) (ASIC(s)), programmable logic device(s) (PLD(s)), field programmable logic device(s) (FPLD(s)), etc. Some or all of the apparatus 100, including the collector 110, the processor 120, the output 130, the data storage 140, and the rules/preferences 150, or parts thereof, can be implemented using instructions, code, and/or other software and/or firmware, etc. stored on a machine accessible or readable medium and executable by, for example, a processor system (e.g., the example processor system 710 of FIG. 7). When any of the appended claims are read to cover a purely software and/or firmware implementation, at least one of the collector 110, processor 120, output 130, data storage 140, and/or rules/preferences 150 is hereby expressly defined to include a tangible medium such as a memory, DVD, CD, etc. storing the software and/or firmware.

In some examples, the processor 120 mines meaningful phrases from a corpus of documents in a relatively short time. While existing tools derive meaningful phrases according to their frequency of occurrence, this method is flawed since a high frequency of occurrence of a phrase does not necessarily indicate that the phrase is a meaningful one. In frequency analysis, a frequency analyzer is used to provide statistics on parameters such as most frequent words, phrases, number of authors, unique authors, and/or distribution over a time frame. The frequency analyzer can utilize a counter for counting words, phrases, etc. The counter provides raw data that is then processed by the frequency analyzer to generate statistics data. Frequency analysis can be in terms of absolute frequency and/or relative frequency, for example. The absolute frequency is the total number of occurrences of the phrase. The relative frequency is the absolute frequency normalized (e.g., divided by) the total number of word occurrences. Alternatively or in addition, the relative frequency is determined by dividing the number of appearances of a phrase by the multiplication of the number of times each word in the phrase appears and taking the nth root of the result, where n is the number of words in the phrase being measured. Alternatively or in addition, Shannon's Information Theory can be applied to compute the incremental value of compound terms based on an analysis of the probability of joint occurrence according to the following

equation, $H(x,y) = -\sum_{i,j} p(i,j) \log p(i,j)$, although this approach can be inefficient.

In a concept analysis, a concept analyzer (implemented in the processor 120, for example) may be employed to find phrases relating to a certain concept in the electronic document data. Concept analysis accommodates single word phrases and relevant multiple word phrases. The concept analyzer can scan all the words or phrases in the collection and assign a relevance score to each of them to indicate relevance of the word or phrase to a researched concept.

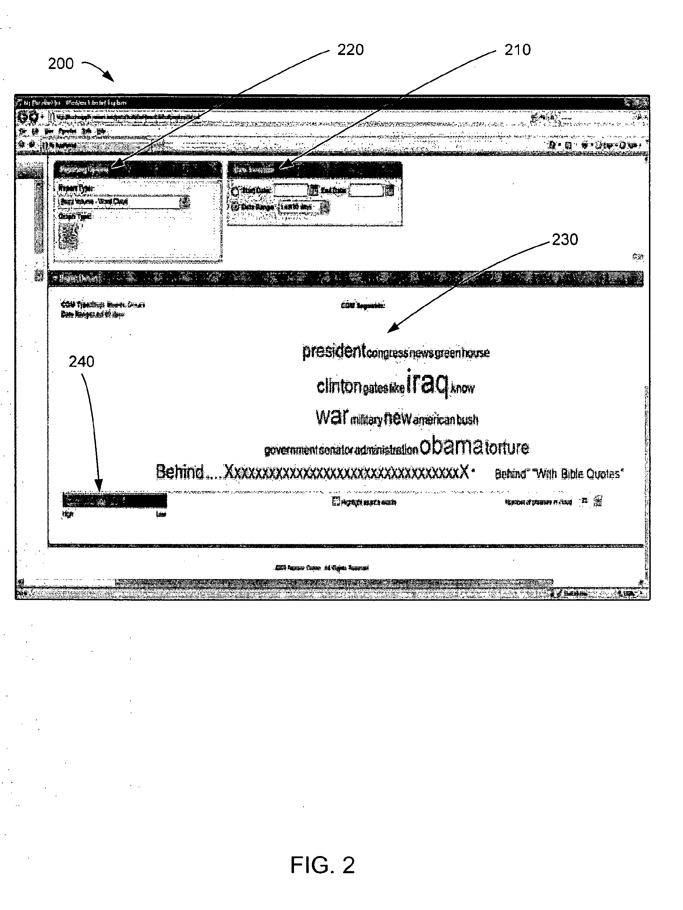

In some examples, relevant phrases identified as meaningful (e.g., having a relevance score above a certain threshold) can be populated in a matrix where distances between words and/or phrases indicate degrees of frequency and/or relationship. The matrix can be populated into a visual interface (e.g., a tag cloud visually depicting tags or descriptors associated with the electronic documents mined) with an analyzed concept/phrase in the middle of the depicted representation and the relevant phrases surrounding it, as illustrated in FIG. 2.

FIG. 2 depicts an example word or topic cloud 200 providing a visual representation of frequency and relationships between words in an electronic document. In an example, phrases can be similarly represented. The graphic representation of FIG. 2 includes words of different sizes, colors, and/or orientations to indicate word frequency and relationship, for example. In some examples, a distance between words can indicate their relationship and/or proximity in an electronic document or set of documents.

As shown in the example cloud 200 of FIG. 2, one or more data entry fields, pull-down menus, etc., 210 allow a user to specify one or more dates and/or date ranges over which a document collection should be searched to identify words and/or phrases of significance. The user can also specify a type of report 220 to be generated. For example, as shown in FIG. 2, a word cloud 230 is generated from mined word and/or phrase data over the specified date range (e.g., the last ninety days). One or more other reporting formats (e.g., table, spreadsheet, etc.) can be specified in addition or in the alternative. A legend 240 and/or other indicator is provided in the example of FIG. 2 to illustrate to a viewer how color in the word/phrase cloud 230 corresponds to significance or relative frequency (e.g., high vs. low), for example.

In some examples, a search input is provided with the interface 200 for entry of one or more search terms in conjunction with the word cloud 230 output. In some examples, a user can click on or otherwise select a word or phrase in the cloud 230 to search the document collection for the selected word or phrase. In some examples, a user can click on or otherwise select a word or phrase in the cloud 230 to view additional information regarding the selected word or phrase in the document collection (e.g., an absolute frequency value, a relative frequency value, a sampling of occurrences of the word or phrase in one or more documents, an identification of documents in which the word or phrase is found, etc.).

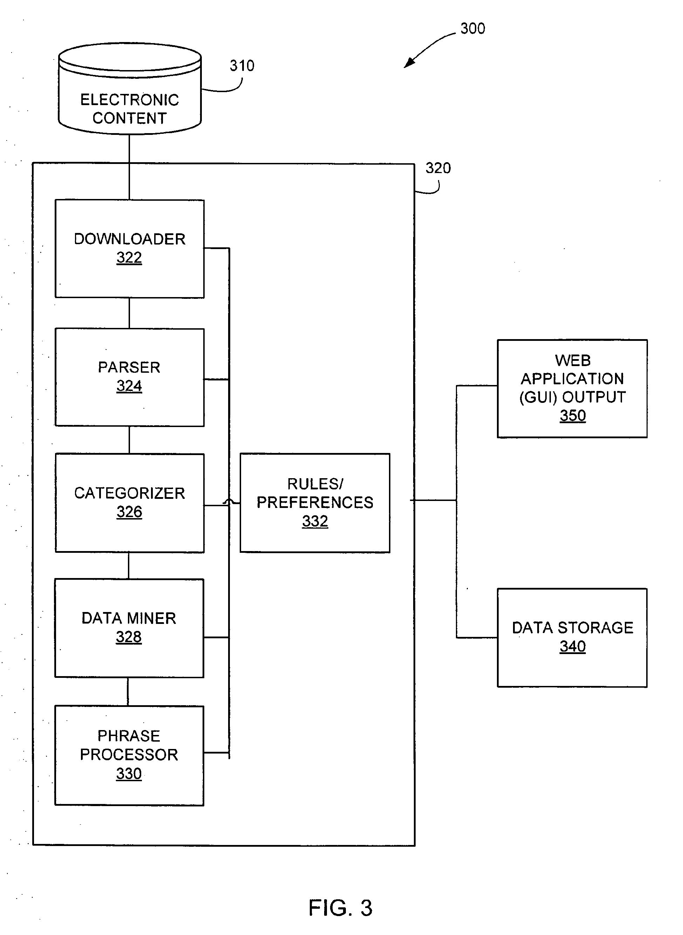

FIG. 3 is an example system 300 to download and process information in electronic documents. The system 300 is an example implementation of the apparatus 100 described above. In the example system 300, one or more sources 310 of electronic documents, such as CGM/CFM sources including social media websites, social news websites, Internet forums, blogs, wikis, discussion lists, video, pictures, non-online electronic content, network-accessible file transfer and/or storage locations, etc., are mined for electronic messages including content to be processed and reported.

The system 300 includes a processor 320 including a downloader 322, a categorizer 326, a data miner 328, a phrase processor 330, and rules/preferences 332 to capture and analyze the electronic content. For example, a web page can be downloaded by the downloader 322 using a hypertext transfer protocol and/or file transfer protocol and then parsed by the parser 324 to extract information in the electronic document.

Electronic documents are parsed to extract and identify text (and metadata) in the documents. The parser 324 can represent a downloaded web page as an extensible Markup Language (XML) tree and apply a script (e.g., a script customized for a particular web site, group of web sites, type of web site, etc.) to extract relevant information from the electronic document. For example, an Extensible Style sheet Language Transformation (XSLT) language can be used to transform XML documents into other XML documents. The XSLT script can ignore non-relevant data based on user customization.

In some examples, each electronic document and/or portion of an electronic document can be categorized by the categorizer 326. The categorizer 326 accesses the content of the parser 324 and categorizes the parsed text according to, for example, the content of the electronic text. Content-based categorization includes categorizing parsed alphanumeric text and/or multimedia content based on one or more categories such as topic, author, title, style, date, age, gender, group, sentiment (e.g., positive treatment, negative treatment, neutral, etc.), etc. Categorization can be based (wholly or in part) on stored rules/preferences 332 such as user preferences, system preferences, group preferences, etc. In some examples, statistics are generated related to the collected, parsed, and categorized electronic information.

In the illustrated example, statistics are generated by the data miner 328. The data miner 328 mines the categorized data according to one or more parameters, preferences, and/or other criteria to provide a user with analysis, trend detection, and/or organized data output, for example. The data miner 328 provides concept analysis in the electronic data to identify, for example, relationship(s) between a word and/or phrase and a concept. The data miner 328 of the illustrated example also measures correlations among words and/or phrases having a relationship to, for example, a concept.

Electronic document information and/or analysis related to the electronic document information is stored in a data storage 340. The data storage 340 can be implemented using a random access memory, a read only memory (e.g., a ROM, EPROM, or EEPROM), a flash memory, a CD, a DVD, a hard disk drive, etc., to at least temporarily stored the electronic message information and/or related analysis.

Parsed electronic document information can be passed from the data miner 328 to a phrase processor 330 and/or retrieved from the data storage 340 to the phrase processor 330. As will be described further below, the phrase processor 330 determines an absolute and/or relative frequency for one or more phrases in the received electronic data.

Output data is passed to and/or retrieved by an output 350. The output 350 can be implemented, for example, as a Web-based application and/or graphical user interface to display information and facilitate user interaction with the information. In some examples, the output 350 includes one or more graphical tools to examine, explore, and/or analyze electronic content information. In the illustrated example, graphical tools are provided as a web application to facilitate user examination and exploration remotely via the World Wide Web and/or private network.

Any or all of the components of the electronic document processing system 300 can be implemented in software, hardware, and/or firmware separately and/or in any number of combinations. For example, one or more integrated circuits, discrete semiconductor components, and/or passive electronic components can be used. Thus, for example, any of the components of system 300, including the processor 320, downloader 322, categorizer 326, data miner 328, phrase processor 330, rules/preferences 332, data storage 340, and/or output 350, or parts thereof, can be implemented using one or more circuit(s), programmable processor(s), application specific integrated circuit(s) (ASIC(s)), programmable logic device(s) (PLD(s)), field programmable logic device(s) (FPLD(s)), etc. Some or all of the system 300, including the processor 320, downloader 322, categorizer 326, data miner 328, phrase processor 330, rules/preferences 332, data storage 340, and/or output 350, or parts thereof, can be implemented using instructions, code, and/or other software and/or firmware, etc. stored on a machine accessible or readable medium and executable by, for example, a processor system (e.g., the example processor system 710 of FIG. 7). When any of the appended claims are read to cover a purely software and/or firmware implementation, at least one of the processor 320, download module 322, categorizer 326, data miner 328, phrase processor 330, data storage 340, and output 350 is hereby expressly defined to include a tangible medium such as a memory, DVD, CD, etc. storing the software and/or firmware.

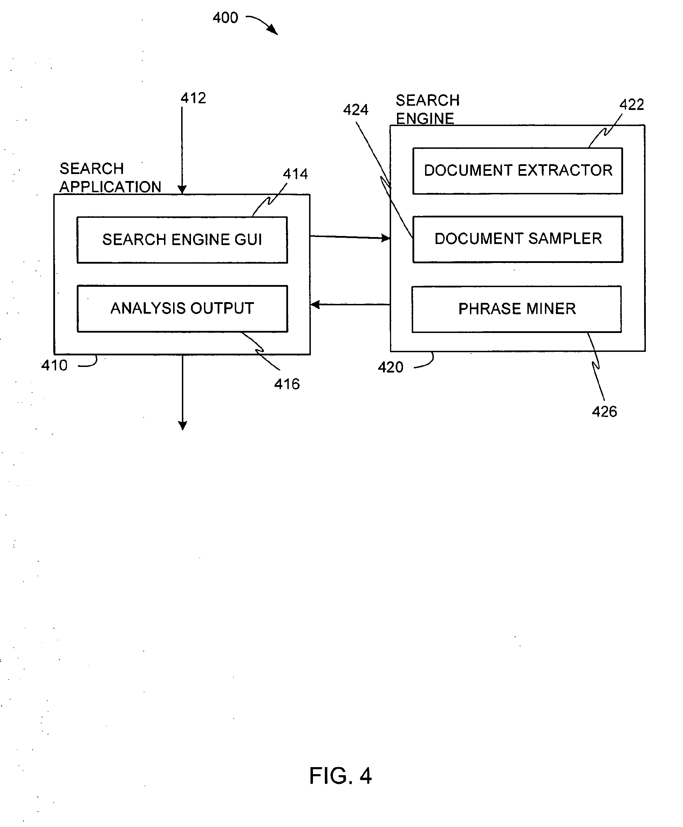

FIG. 4 is a block diagram of an example electronic document processing system 400. The processing system 400 includes a search application 410 and a search engine 420. The search engine 410 includes a search engine graphical user interface (GUI) 414 and an analysis output 416. The search application 410 accepts a user query including one or more terms 412. The user query 412 can be generated by a human user and/or can be generated by a software program and/or computer system, for example. The processing system 400 can be implemented as part of and/or work in conjunction with the apparatus 100 of FIG. 1 and/or the system 300 of FIG. 3, described above. For example, the search application 410 can be implemented as part of the GUI 350, and the search engine 420 can be implemented as part of the processor 320. Electronic content, such as electronic content 310 from CGM/CFM sources, can be provided to the search engine 420 for processing, for example.

The one or more terms in the query 412 are provided via the GUI 414 by a human user and/or input from an external system and/or application, for example. In some examples, the search terms are transferred to the search engine 420 via the GUI 414. The search application 410 can be implemented by a personal computer, mobile device, multimedia player, personal digital assistant, etc., having network communication and a display. The GUI 414 can be implemented via a browsing program (e.g., Microsoft's Internet Explorer™ browser, Netscape Navigator™ browser, Mozilla Firefox™ browser, Opera browser, handheld device browser, etc.), multimedia application, and/or custom viewer, for example.

The search engine 420 includes a document extractor 422, a document sampler 424, and a phrase miner 426. The search engine 420 can be implemented via a processor and a computer-readable medium, such as random access memory, read only memory (ROM, EPROM, EEPROM, etc.), flash memory, a hard disk drive, and/or other electronic storage, in communication with the processor. The processor can be any of a number of processors and/or application specific integrated circuits, such as processors available from Intel Corporation or AMD.

The document extractor 422 extracts relevant documents from a universe of available electronic documents. Electronic documents are extracted according to one or more criteria, such as topic, sentiment, key word and/or phrase, author, title, source, etc. Document metadata can be examined, created, and/or stored in conjunction with a document search and extraction, for example. The document extractor 422 can search the World Wide Web, a private network, and/or a stored electronic collection of documents (e.g., a private corporate database of documents) for example. In some examples, Web services can be used to perform Web-based searches for electronic documents.

The document sampler 424 collects a sample of the extracted documents. For example, the document sampler 424 collects a random, pseudorandom, and/or specified sample of the extracted documents from the document extractor 422. The document sampler 424 can sample extracted documents according to a threshold or quantity parameter, such as sampling one thousand documents.

The sampled, extracted documents are passed from the document sampler 424 to the phrase miner 426 for phrases to be mined from the document sample. The phrase miner 426 identifies one or more phrases in the sampled documents. Phrases can be identified based on one or more rules and/or criteria. For example, the phrase miner 426 identifies phrases in an electronic document based on lexical analysis rules to identify sequences of words from the document. In some examples, a document is first parsed into sentences and then into one or more phrases within each sentence by the phrase miner 426. The phrase miner 426 utilizes punctuation between and/or within a sentence to identify a phrase, for example. Phrases can be identified based on one or more key words, for example. In an example, one or more key words can be provided to the phrase miner 426 to direct and/or train the phrase miner 426 to identify one or more of the key words in a phrase. Pronouns, article, prepositional phrases, etc., can be discarded and/or used to identify boundaries of a phrase, for example. In an example, identified phrases can be of varying lengths (e.g., two-word phrases, three-word phrases, four-word phrases, five-word phrases, etc.).

As discussed further below, the phrase miner 426 processes identified phrases in an electronic document to determine a frequency of the phrase (e.g., an absolute frequency and/or a relative frequency) in the document. The phrase miner 426 can also determine a frequency of a phrase among the sampled documents, for example.

Results are provided from the search engine 420 to the search application 410. For example, the search engine 420 provides phrase mining output and/or other electronic document analysis in conjunction with document search results to the analysis output 416. The analysis output 416 provides the supplied search results and associated analysis to a user via the GUI 414. For example, electronic document search results and phrases mined from the documents can be presented via graphs associated with the search results showing phrases and their frequency. Phrase frequency and/or other analysis can also be accessed by drilling down into a search result, for example. Thus, a user can access document search results as well as view phrases mined from the documents and see an indication of their relative and/or absolute frequency, for example.

Any or all of the components of the electronic document processing system 400 can be implemented in software, hardware, and/or firmware separately and/or in any number of combinations. For example, one or more integrated circuits, discrete semiconductor components, and/or passive electronic components can be used. Thus, for example, any of the components of system 400, or parts thereof, can be implemented using one or more circuit(s), programmable processor(s), application specific integrated circuit(s) (ASIC(s)), programmable logic device(s) (PLD(s)), field programmable logic device(s) (FPLD(s)), etc. Some or all of the system 400, or parts thereof, can be implemented using instructions, code, and/or other software and/or firmware, etc. stored on a machine accessible or readable medium and executable by, for example, a processor system (e.g., the example processor system 710 of FIG. 7). When any of the appended claims are read to cover a purely software and/or firmware implementation, at least one of the search application 410, search engine interface 414, analysis output 416, search engine 420, document extractor 422, document sampler 424, and phrase miner 426 is hereby expressly defined in at least one example to include a tangible medium such as a memory, DVD, CD, etc. storing the software and/or firmware.

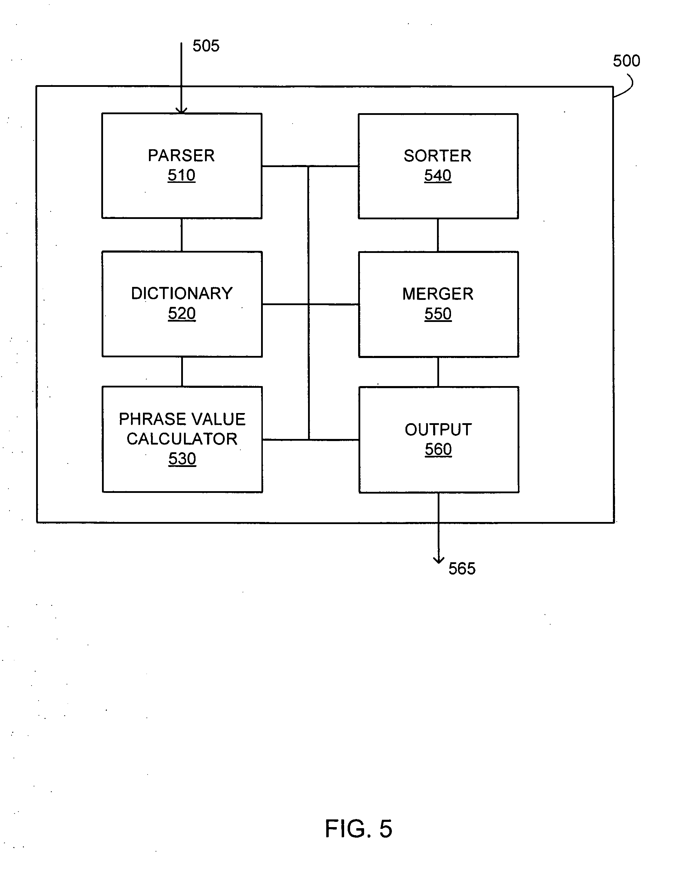

FIG. 5 is a block diagram of an example phrase mining system 500 to identify phrases in an electronic message and/or other electronic document and determine a frequency associated with a phrase. The phrase mining system 500 includes a phrase parser 510, a dictionary 520, a phrase value calculator 530, a sorter 540, a phrase list merger 550, and an output 560.

The phrase mining system 500 receives an input 505 of one or more electronic documents for phrase processing. The phrase mining system 500 can receive the input 505 from a document search engine, such as the search engine 402, for example. The input 505 document(s) are passed to the parser 510 which analyzes each document according to one or more lexical rules, preferences, key words, etc., to identify one or more phrases of interest in each document 505. For

For example, a list of phrases can be created from a downloaded document sample (e.g., 500-1000 messages if the document corpus is larger than 1000 documents). Each message is split into sentences or speech parts using the following characters:.!,?; \r \n \t. The following characters are removed from each speech part: .!?@#$%^&*':;()\n-,+[]_ <>~=/"\r\t.

The identified phrases are used to build one or more phrase dictionaries 520. The phrase dictionaries 520 can include one or more sub-phrases as well (e.g., dividing a five word phrase into a one word dictionary, a two word dictionary, a three word dictionary, a four word dictionary, and a five word dictionary).

For example, for a phrase having four words, "I love this case," four dictionaries (e.g., hash tables) are created from all the speech parts collected. The dictionaries 520 include phrases from the speech parts and counters indicating how many times the phrases appeared in the speech parts collected. For example, if the speech part is "I love this cat" the following items are added to the two word dictionary "I love", "love this", "this cat". Upon completion, each dictionary 520 should contain phrases as items and the number of times each phrase appeared in the electronic message(s) as values.

The phrases in the dictionary 520 are then examined by the phrase value calculator 530 to determine a value for each phrase. The value for a phrase can be based on a variety of criteria such as relative frequency, absolute frequency, key word, etc. The phrase value calculator 530 applies one or more algorithms and/or metrics to each phrase within a document and/or across multiple documents to determine the value associated with the phrase.

For example, the phrase value calculator 530 can be used to determine the relative frequency of a phrase rather than its absolute frequency. The phrase value calculator 530 processes a phrase according to a metric that takes into account the frequency of the phrase relative to the frequency of the words included in the phrase. After a value is calculated for each phrase according to this metric, the phrases with the highest values are determined to be the most meaningful ones in the document and/or collection of documents.

The phrase value calculator 530 calculates the value for each phrase as follows. For example, if the phrase includes words word1, word2, word3, ....., word(n), then its value determined from each of the phrases in the 2, 3, 4, 5 word dictionaries would be

$$\sqrt[n]{\frac{freq(phrase)}{\sqrt[n]{freq(word1) * freq(word2) * \cdots * freq(word\ n)}}} \qquad \text{(Eq. 1),}$$

where n corresponds to the number of words in the phrase. The frequency of the entire phrase is compared to the frequency of each individual word in the phrase. The freq(phrase) is taken from a corresponding word dictionary (e.g., one word dictionary, two word dictionary, ... n word dictionary), whereas frequency of an individual word is taken from the one word dictionary.

For example, the phrase value calculator 530 can calculate the value of the two following phrases: "Elton John" and "John is". Although the phrase "John is" might be a more common phrase, the phrase would be associated with a lower value since "is" is a very common word, and "Elton" is not a very common word. Thus, the denominator of the value calculated for the phrase "John is" is higher, and the overall value for this phrase is lower. The n-th root of the whole value is computed for a phrase that is n words long (e.g., two words, three words, four words, five words, etc.). Using this metric determined by Equation 1 allows the phrase sorter 540 to compare the values of phrases of any length. Using Equation 1, the phrase value calculator 530 can take into account the relative frequency of the phrase rather than the absolute frequency of the phrase. Additionally, the phrase value calculator 530 can use Equation 1 to compare phrases in different lengths. Using Equation 1, the phrase value calculator 530 can provide high performance to supplement a search engine, for example.

For example, computing a value for "Elton John is good", where "Elton John is good" appears 25 times, "Elton" appears in a document 50 times, "John" appears in the document 100 times, "is" appears in the document 400 times, and "good" appears in the document 200 times would result in the following equation:

$$value = \sqrt[4]{\frac{25}{\sqrt[4]{50 * 100 * 400 * 200}}} = \sqrt[4]{\frac{25}{141.42}} = 0.648 \text{ (Eq. 2)}.$$

After phrase values are calculated, the phrase value calculator 530 provides the phrases and values to the sorter 540. The sorter 540 saves a certain number of phrases and values from each dictionary 520. For example, the phrase value calculator 530 saves the top 600 phrases and values from the 2 word dictionary, the top 300 phrases and values from the 3 word dictionary, the top 200 phrases and values from the 4 word dictionary and the top 100 phrases and values from the 5 word dictionary.

The phrase sorter 540 reviews the phrase lists in order of increasing number of words to remove sub-phrases subsumed by larger phrases. For example, the sorter 540 processes the two word phrase list. If a phrase is included in one of the phrases in the three word list, the two word phrase is removed from the list (for example, "I love" is removed from the two word list if "I love cats" appears in the 3 word list). The sorter 540 reviews the three word list and removes any phrase that is a part of a four word phrase. The sorter 540 reviews the four word list removes any phrase if it is a part of a five word phrase, etc.

The sorter 540 provides the resulting phrase lists(s) and values to the phrase merger 550. The merger 550 merges the resulting lists into a new list. The merger 550 sorts the new list according to the corresponding phrase values from the phrase value calculator 530. The merger 550 selects the first N phrases from the list and identifies the selected phrases as the most meaningful phrases in the electronic document(s) searched. The selected N phrases are provided as an output 560 for a search engine output GUI and/or other analytic application. For example, the phrases (and associated values) can be output for display to a user via a GUI alone and/or in conjunction with electronic message search results. Alternatively or in addition, results can be stored and/or transmitted to another application/system for further processing.

Any or all of the components of the phrase mining system 500 can be implemented in software, hardware, and/or firmware separately and/or in any number of combinations. For example, one or more integrated circuits, discrete semiconductor components, and/or passive electronic components can be used. Thus, for example, any of the components of system 500, or parts thereof, can be implemented using one or more circuit(s), programmable processor(s), application specific integrated circuit(s) (ASIC(s)), programmable logic device(s) (PLD(s)), field programmable logic device(s) (FPLD(s)), etc. Some or all of the system 500, or parts thereof, can be implemented using instructions, code, and/or other software and/or firmware, etc. stored on a machine accessible or readable medium and executable by, for example, a processor system (e.g., the example processor system 710 of FIG. 7). When any of the appended claims are read to cover a purely software and/or firmware implementation, at least one of the phrase parser 510, dictionary 520, phrase value calculator 530, sorter 540, phrase list merger 550, and output 560 is hereby expressly defined in at least one example to include a tangible medium such as a memory, DVD, CD, etc. storing the software and/or firmware.

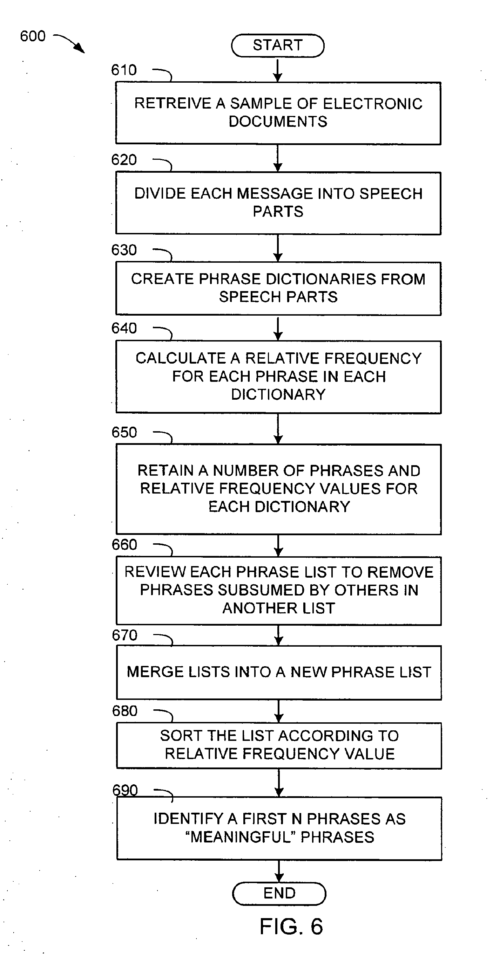

FIG. 6 is a flow diagram representative of example machine readable instructions which may be executed to perform relative frequency based phrase mining 600 in one or more electronic messages and/or documents. At 610, a sample of electronic documents is retrieved. For example, a sample of 500-1000 messages is downloaded for review. If the document corpus is less than 1000 documents, the entire corpus can be reviewed.

At 620, each message is divided into sentences or speech parts. For example, each message can be divided into sentences and/or speech parts using the following characters:.!,?; \r \n \t. Additionally, each speech part can be reviewed to remove the following characters:.!?@#$%^&*':;()\n-,+[]_<>~=/"\r\t, for example.

At 630, one or more phrase dictionaries are created from the speech parts collected. Each dictionary includes a list of phrases have a certain number of words and associated counter indicating a number of occurrences of the phrase in the speech parts collected. For example, five dictionaries (e.g., hash tables) can be created from the speech parts collected that includes a one word dictionary, a two word dictionary, a three word dictionary, a four word dictionary, and a five word dictionary. For example; if the speech part is "I love this cat", the following items are added to the two word dictionary "I love", "love this", "this cat". After the phrase dictionaries are created, each dictionary includes phrases as items and the number each phrase appeared as corresponding values.

At 640, a relative frequency value is calculated for each phrase in each of the phrase dictionaries. For example, for each of the phrases in the 2, 3, 4, 5 words dictionary, the following value is calculated:

$$\sqrt[n]{\frac{freq(phrase)}{\sqrt[n]{freq(word1) * freq(word2) * \cdots * freq(word\,n)}}},$$

if phrase=word1, word2, ...word n. The freq(phrase) is taken from the 2, 3, 4 or 5 word dictionary and freq(word i) is taken from the 1 word dictionary, for example.

At 650, a number of phrases and values are retained for each dictionary. For example, the top 600 phrases and values are saved from the two word dictionary; the top 300 phrases and values are saved from the three word dictionary; the top 200 phrases and values are saved from the four word dictionary; and the top 100 phrases and values are saved from the five word dictionary.

At 660, each list is reviewed to remove phrases subsumed by other phrases in a list. For example, the two word list is reviewed to remove phrases included in one of the phrases in the three word list. For example, "I love" is removed from the two word list if "I love cats" appears in the three word list. The three word list is reviewed to remove a phrase if the phrase is a part of a four word phrase. Similarly, the four word list is removed, and a phrase is removed if it is a part of a five word phrase.

At 670, the word lists are merged into a new list including all remaining phrases. At 680, the list is sorted according to the phrase relative frequency values determined above. At 690, a first N phrases from the list are used meaningful phrases from the examined speech parts. These N phrases can be displayed to a user via a graphical interface, saved in a memory, and/or routed to another system and/or application for further use. The N phrases can be output alone and/or in conjunction with search results according to one or more terms from the corpus of documents.

FIG. 6 is a flow diagram representative of machine readable and executable instructions or processes that can be executed to provide electronic document search and data mining such as using the example document processor 400 and/or phrase miner 500 of FIGs. 4 and 5, respectively. The example process(es) of FIG. 6 can be performed using a processor, a controller and/or any other suitable processing device. For example, the example process(es) of FIG. 6 can be implemented in coded instructions stored on a tangible medium such as a flash memory, a read-only memory (ROM) and/or random-access memory (RAM) associated with a processor (e.g., the processor 712 of FIG. 7). Alternatively, some or all of the example process(es) of FIG. 6 can be implemented using any combination(s) of application specific integrated circuit(s) (ASIC(s)), programmable logic device(s) (PLD(s)), field programmable logic device(s) (FPLD (s)), discrete logic, hardware, firmware, etc. Also, some or all of the example process(es) of FIG. 6 can be implemented manually or as any combination(s) of any of the foregoing techniques, for example, any combination of firmware, software, discrete logic and/or hardware. Further, although the example process(es) of FIG. 6 are described with reference to the flow diagram of FIG. 6, other methods of implementing the process(es) of FIG. 6 can be employed. For example, the order of execution of the blocks may be changed, and/or some of the blocks described may be changed, eliminated, sub-divided, or combined. Additionally, any or all of the example process(es) of FIG. 6 can be performed sequentially and/or in parallel by, for example, separate processing threads, processors, devices, discrete logic, circuits, etc.

FIG. 7 is a block diagram of an example processor system that may execute the example instructions of FIG. 6 to implement some or all of the example apparatus and/or system of FIGs. 1, 3, 4, and/or 5 described herein. As shown in FIG. 7, the processor system 710 includes a processor 712 that is coupled to an interconnection bus 714. The processor 712 includes a register set or register space 716, which is depicted in FIG. 7 as being entirely on-chip, but which could alternatively be located entirely or partially off-chip and directly coupled to the processor 712 via dedicated electrical connections and/or via the interconnection bus 714. The processor 712 may be any suitable processor, processing unit or microprocessor. Although not shown in FIG. 7, the system 710 may be a multi-processor system and, thus, may include one or more additional processors that are identical or similar to the processor 712 and that are communicatively coupled to the interconnection bus 714.

The processor 712 of FIG. 7 is coupled to a chipset 718, which includes a memory controller 720 and an input/output (I/O) controller 722. As is well known, a chipset typically provides I/O and memory management functions as well as a plurality of general purpose and/or special purpose registers, timers, etc. that are accessible or used by one or more processors coupled to the chipset 718. The memory controller 720 performs functions that enable the processor 712 (or processors if there are multiple processors) to access a system memory 724 and a mass storage memory 725.

The system memory 724 may include any desired type of volatile and/or nonvolatile memory such as, for example, static random access memory (SRAM), dynamic random access memory (DRAM), flash memory, read-only memory (ROM), etc. The mass storage memory 725 may include any desired type of mass storage device including hard disk drives, optical drives, tape storage devices, etc.

The I/O controller 722 performs functions that enable the processor 712 to communicate with peripheral input/output (I/O) devices 726 and 728 and a network interface 730 via an I/O bus 732. The I/O devices 726 and 728 may be any desired type of I/O device such as, for example, a keyboard, a video display or monitor, a mouse, etc. The network interface 730 may be, for example, an Ethernet device, an asynchronous transfer mode (ATM) device, an 802.11 device, a DSL modem, a cable modem, a cellular modem, etc. that enables the processor system 710 to communicate with another processor system.

While the memory controller 720 and the I/O controller 722 are depicted in FIG. 7 as separate functional blocks within the chipset 718, the functions performed by these blocks may be integrated within a single semiconductor circuit or may be implemented using two or more separate integrated circuits.

Although certain methods, apparatus, and articles of manufacture have been described herein, the scope of coverage of this patent is not limited thereto. To the contrary, this patent covers all methods, apparatus, and articles of manufacture fairly falling within the scope of the appended claims either literally or under the doctrine of equivalents.

**Claims**

1. A computer-implemented method (600) of identifying phrases in electronic information, comprising:

   receiving an electronic document (310, 505) including a plurality of words and phrases regarding at least one topic (610);
   creating one or more phrase dictionaries (520) from content of the electronic document (310, 505) (630);
   generating a relative frequency value for each phrase in each of the one or more phrase dictionaries (520), the relative frequency value for a phrase based at least in part on a comparison between a frequency of the phrase in the electronic document (310, 505) and a frequency of each individual word in the phrase (640, 650);
   selecting one or more phrases based at least in part on a threshold and the relative frequency value generated for each phrase (690); and
   outputting the selected one or more phrases and the relative frequency values associated with each of the selected one or more phrases for graphical display to a user.

2. A computer-implemented method (600) according to claim 1, wherein obtaining further comprises obtaining a plurality of electronic documents (310, 505) and sampling a subset of the plurality of electronic documents (310, 505) for phrase mining (610).

3. A computer-implemented method (600) according to claim 1, wherein generating the relative frequency value further comprises generating the relative frequency value for each phrase based at least in part on:

$$\sqrt[n]{\frac{freq(phrase)}{\sqrt[n]{freq(word1) * freq(word2) * \cdots * freq(word\, n)}}},$$

   wherein phrase= word 1 word2 ... word n and wherein a frequency of the phrase is determined from an n-word dictionary (520) and a frequency of each individual word 1 through n in the phrase is determined from a 1-word dictionary (520).

4. A computer-implemented method (600) according to claim 1, wherein outputting the selected one or more phrases and the relative frequency values drives automated analysis of the electronic document (310, 505).

5. A computer-implemented method (600) according to claim 1, further comprising dividing the content of the electronic document (310, 505) into speech parts (620) and creating the one or more phrase dictionaries (520) from the speech parts (630).

6. A computer-implemented method (600) according to claim 1, further comprising reviewing the one or more phrases and the corresponding relative frequency values to remove phrases subsumed in other larger phrases having relative frequency values (660).

7. A computer-implemented method (600) according to claim 6, further comprising merging remaining one or more phrases and relative frequency values into a single list (670) and sorting the list based on relative frequency value (680).

8. An electronic document phrase mining apparatus (300, 400, 500), comprising:

   a parser (324, 510) separating content of an electronic document (310, 505) into a plurality of speech parts, the speech parts including one or more phrases, the parser (324, 510) creating a phrase dictionary (520) for organizing each length of phrase in the electronic document (310, 505);

a phrase value calculator (330, 530) generating a relative frequency value for each phrase in each phrase dictionary (520), the relative frequency value for a phrase based at least in part on a comparison between a frequency of the phrase in the electronic document (310, 505) and a frequency of each individual word in the phrase;

a sorter (540) selecting one or more phrases based at least in part on a threshold and the relative frequency value generated for each phrase; and

an output (350, 560) outputting the selected one or more phrases and the relative frequency values associated with each of the selected one or more phrases for graphical display to a user.

9. An apparatus (300, 400, 500) according to claim 8, wherein the parser (324, 510) creates a plurality of phrase dictionaries (520) including a one word phrase dictionary (520) and an n word phrase dictionary (520), wherein n corresponds to a number of words in a specific dictionary (520) and wherein a maximum n corresponds to a number of words in the longest phrase identified by the parser (324, 510) in the electronic document (310, 505).

10. An apparatus (300, 400, 500) according to claim 9, wherein the plurality of phrase dictionaries (520) includes a one word phrase dictionary (520), a two word phrase dictionary (520), a three word phrase dictionary (520), a four word phrase dictionary (520), and a five word phrase dictionary (520).

11. An apparatus (300, 400, 500) according to claim 8, further comprising a document sampler (424) obtaining a plurality of electronic documents (310, 505) and sampling a subset of the plurality of electronic documents (310, 505) for phrase mining.

12. An apparatus (300, 400, 500) according to claim 8, wherein the phrase value calculator (330, 530) generates the relative frequency value for each phrase based at least in part on:

$$\sqrt[n]{\frac{freq(phrase)}{\sqrt[n]{freq(word1) * freq(word2) * \cdots * freq(word\ n)}}},$$

wherein phrase= word 1 word2 ... word n and wherein a frequency of the phrase is determined from an n-word dictionary (520) and a frequency of each individual word 1 through n in the phrase is determined from a 1-word dictionary (520).

13. An apparatus (300, 400, 500) according to claim 8, wherein the output (350, 560) outputs the selected one or more phrases and the relative frequency values to drive automated analysis of the electronic document (310, 505).

14. An apparatus (300, 400, 500) according to claim 8, further comprising a sorter (540) reviewing the one or more phrases and the corresponding relative frequency values to remove phrases subsumed in other larger phrases having relative frequency values.

15. An apparatus (300, 400, 500) according to claim 14, further comprising a merger (550) merging remaining one or more phrases and relative frequency values from the sorter (540) into a single list and sorting the list based on relative frequency value.

FIG. 1

200

220

210

230

240

president congress news green house
clinton gates like iraq know
war military new american bush
government senator administration obama torture
Behind....XxxxxxxxxxxxxxxxxxxxxxxxxxxxxxxxxX •   Behind" "With Bible Quotes"

# FIG. 2

300

310

ELECTRONIC
CONTENT

320

DOWNLOADER
322

PARSER
324

CATEGORIZER
326

DATA MINER
328

PHRASE
PROCESSOR
330

RULES/
PREFERENCES
332

WEB
APPLICATION
(GUI) OUTPUT
350

DATA STORAGE
340

FIG. 3

400

SEARCH
APPLICATION

412

SEARCH ENGINE GUI

414

ANALYSIS OUTPUT

416

410

SEARCH
ENGINE

424

422

DOCUMENT EXTRACTOR

DOCUMENT SAMPLER

PHRASE MINER

420

426

FIG. 4

505

500

PARSER
510

SORTER
540

DICTIONARY
520

MERGER
550

PHRASE VALUE
CALCULATOR
530

OUTPUT
560

565

FIG. 5

600

START

610
RETREIVE A SAMPLE OF ELECTRONIC DOCUMENTS

620
DIVIDE EACH MESSAGE INTO SPEECH PARTS

630
CREATE PHRASE DICTIONARIES FROM SPEECH PARTS

640
CALCULATE A RELATIVE FREQUENCY FOR EACH PHRASE IN EACH DICTIONARY

650
RETAIN A NUMBER OF PHRASES AND RELATIVE FREQUENCY VALUES FOR EACH DICTIONARY

660
REVIEW EACH PHRASE LIST TO REMOVE PHRASES SUBSUMED BY OTHERS IN ANOTHER LIST

670
MERGE LISTS INTO A NEW PHRASE LIST

680
SORT THE LIST ACCORDING TO RELATIVE FREQUENCY VALUE

690
IDENTIFY A FIRST N PHRASES AS "MEANINGFUL" PHRASES

END

FIG. 6

710

712

PROCESSOR

716

714

722    718

726

I/O
DEVICE

I/O
CONTROLLER

MEMORY
CONTROLLER

732

720

I/O
DEVICE

730

NETWORK
INTERFACE

728

SYSTEM
MEMORY

MASS STORAGE
MEMORY

724

725

FIG. 7

Europäisches
Patentamt

European
Patent Office

Office européen
des brevets

# EUROPEAN SEARCH REPORT

Application Number

EP 10 00 8294

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 7 503 000 B1 (KREULEN JEFFREY THOMAS [US] ET AL) 10 March 2009 (2009-03-10) * abstract * * column 1, lines 29-58 * * column 2, line 11 - column 8, line 10 * * claim 1 * ----- | 1-15 | INV. G06F17/27 G06F17/30 |
| A | US 2002/128821 A1 (EHSANI FARZAD [US] ET AL) 12 September 2002 (2002-09-12) * columns 82-105 * ----- | 6,14 | |
| A | Zdravko Markov & Daniel T. Larose: "Data Mining the Web: Uncovering Patterns in Web Content, Structure, and Usage" May 2007 (2007-05), Wiley interscience , Hoboken, NJ, USA , XP002606886 ISBN: 978-0-471-66655-4 , pages 28-29 * page 28 - page 29 * ----- | 1-15 | |

TECHNICAL FIELDS
SEARCHED       (IPC)

G06F

The present search report has been drawn up for all claims

| Place of search | Date of completion of the search | Examiner |
|---|---|---|
| Berlin | 26 October 2010 | Woods, Justin |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

& : member of the same patent family, corresponding
     document

EPO FORM 1503 03.82 (P04C01)

**ANNEX TO THE EUROPEAN SEARCH REPORT
ON EUROPEAN PATENT APPLICATION NO.**

EP 10 00 8294

This annex lists the patent family members relating to the patent documents cited in  the above-mentioned European search report.
The members are as contained in the European Patent Office EDP file on
The European Patent Office is in no way liable for these particulars which are merely given for the purpose of information.

26-10-2010

| Patent document cited in search report | | Publication date | Patent family member(s) | Publication date |
|---|---|---|---|---|
| US 7503000 | B1 | 10-03-2009 | NONE | |
| US 2002128821 | A1 | 12-09-2002 | NONE | |

EPO FORM P0459

For more details about this annex : see Official Journal of the European Patent Office, No. 12/82

**EP 2 282 271 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61232102 A